# EUROPÄISCHE PATENTSCHRIFT

(11) **EP 2 118 625 B1**
(45) Veröffentlichungstag und Bekanntmachung des Hinweises auf die Patenterteilung: **22.08.2018**
(21) Anmeldenummer: 08716820.9
(22) Anmeldetag: 13.02.2008
(51) Int. Cl.: G01F 23/26

(54) **VORRICHTUNG ZUR BESTIMMUNG UND/ODER ÜBERWACHUNG EINER PROZESSGRÖßE**
DEVICE FOR DETERMINING AND/OR MONITORING A PROCESS VARIABLE
DISPOSITIF DESTINÉ À DÉTERMINER ET/OU À SURVEILLER UN PARAMÈTRE DU PROCÉDÉ

(30) Priorität: 16.02.2007 DE 102007008358
(43) Veröffentlichungstag der Anmeldung: 18.11.2009
(73) Patentinhaber: Endress+Hauser SE+Co. KG, 79689 Maulburg (DE)
(72) Erfinder: DIETERLE, Roland, 79539 Lörrach (DE); WERNET, Armin, 79618 Rheinfelden (DE); KRUMBHOLZ, Andreas, 79689 Maulburg (DE)
(74) Vertreter: Andres, Angelika Maria
(86) Internationale Anmeldenummer: PCT/EP2008/051701
(87) Internationale Veröffentlichungsnummer: WO 2008/098948

(56) Entgegenhaltungen:
- EP-A- 0 621 466
- DE-A1- 2 819 731
- DE-A1- 19 757 190
- DE-A1-102004 050 495
- US-A- 3 119 266
- US-A- 5 546 005

## Beschreibung

Die Erfindung bezieht sich auf eine Vorrichtung zur Bestimmung und/oder Überwachung mindestens einer Prozessgröße eines Mediums, mit mindestens einer Sondeneinheit und mit mindestens einer Elektronikeinheit, welche die Sondeneinheit mit einem Ansteuersignal beaufschlagt und welche von der Sondeneinheit ein Empfangssignal empfängt, wobei die Sondeneinheit mindestens eine Sondenelektrode und mindestens eine Guardelektrode aufweist und wobei die Sondenelektrode und die Guardelektrode zumindest teilweise von mindestens einer Isolierungseinheit umgeben sind. Bei der Prozessgröße handelt es sich beispielsweise um den Füllstand des Mediums in einem Behälter. Bei dem Medium handelt es sich beispielsweise um eine Flüssigkeit oder um ein Schüttgut oder allgemein um ein Fluid.

In der modernen Prozess- und Automatisierungstechnik ist es beispielsweise bekannt, den Füllstand über das kapazitive Messprinzip zu bestimmen. Dabei bilden eine Sondeneinheit und die Wandung des Behälters bzw. eine zweite Sondeneinheit in Verbindung mit dem Medium als Dielektrikum einen Kondensator. Die Kapazität dieses Kondensators ist abhängig vom Füllstand des Mediums. Somit ist es möglich, ausgehend von der gemessenen Kapazität des Kondensators den Füllstand zu bestimmen, respektive zu überwachen. Eine Problematik ist dadurch gegeben, dass das Medium mit der Sondeneinheit in Kontakt kommt und somit auch an dieser anhaften kann. Ein solcher Ansatz kann dazu führen, dass eine Messung bzw. eine Überwachung des Füllstandes generell nicht mehr möglich ist. Hierfür werden beispielsweise Sondeneinheiten verwendet, welche eine Sondenelektrode und mindestens eine Guardelektrode aufweisen. Die Guardelektroden werden dabei meist mit dem gleichen Signal wie die Sondenelektrode beaufschlagt, so dass beide Elektroden auf dem gleichen elektrischen Potential liegen. Solche Guardelektroden sind vor allem dann vorteilhaft, wenn es durch einen Mediumsansatz zu einer Verbindung zwischen der Sonde und der Behälterwandung kommt. Das durch die Guardelektrode entstehende elektrische Feld verhindert wirksam einen Stromfluss von der Sondenelektrode durch den Ansatz in Richtung Behälterwand. Insbesondere bei leitfähigen und anhaftenden Medien ist es für einen sichereren Messwert erforderlich, mit einer solchen Guardelektrode zu arbeiten. Je besser die elektrische Kopplung von der Guardelektrode zum anhaftenden Medium ist, desto besser ist die Wirkung des Guards. Daraus folgt, dass eine blanke Guardelektrode die beste Funktion erfüllen würde. Bei Anwendungen z.B. in Lebensmitteln als Medium ist es jedoch aus hygienischen Gründen erforderlich, eine "spaltfreie Konstruktion" zu gewährleisten. Dabei ist eine Sondeneinheit mit blanker Guardelektrode und isolierter Sondenelektrode (dies verhindert den direkten elektrischen Kontakt zwischen Sonde und Medium) zwangsläufig mit einem Spalt verbunden, da hier die Materialpaarung Metall-Kunststoff, und somit keine stoffschlüssige Verbindung, vorliegt. Eine komplett isolierte Anordnung, bei welcher die Isolierung sowohl die Sondenelektrode, als auch die Guardelektrode umschließt, weist diesen Nachteil der fehlenden spaltfreien Verbindung nicht auf.

Der Oberbegriff des Anspruchs 1 ist aus EP 0 621 486 A oder EP 0 101 580 A1 bekannt.

Für eine hohe Ansatzverträglichkeit mit spaltfreier vollisolierter Sondeeinheit sind somit folgende Anforderungen für die Anwendung der Guardelektrode erforderlich: Die Stärke der Isolierung sollte im Bereich der Guardelektrode möglichst gering sein, weiterhin sollte der DK-Wert, also der Wert der Dielektrizitätskonstanten der Isolierung im selben Bereich möglichst hoch sein, weil der Wert der Impedanz zwischen der Guardelektrode und der Umgebung möglichst gering sein sollte.

Die Aufgabe der Erfindung besteht somit darin, eine Vorrichtung zur Bestimmung und/oder Überwachung mindestens einer Prozessgröße anzugeben, welche über kapazitive Messungen eine möglichst große Anwendungsbreite erlaubt.

Die Erfindung löst die Aufgabe durch eine Vorrichtung gemäß Anspruch 1. Die Isolation ist also um die Guardelektrode herum dünner als im Bereich der Sondenelektrode.

Die Isolierungseinheit umschließt somit einen Endbereich der Sondenelektrode und der mediumsberührende Bereich der Sondenelektrode wird umfasst. Weiterhin wird der Übergang zwischen der Guardelektrode und der Sondenelektrode spaltfrei umschlossen.

Eine Ausgestaltung sieht vor, dass die Sondeneinheit zumindest abschnittsweise stabförmig ausgestaltet ist.

Eine Ausgestaltung beinhaltet, dass die Guardelektrode und/oder die Sondenelektrode zumindest abschnittsweise zylindrisch ausgestaltet sind.

Eine Ausgestaltung sieht vor, dass die Guardelektrode einen größeren Umfang und/oder einen größeren Durchmesser und/oder eine größere Oberfläche als die Sondenelektrode aufweist. In den meisten Fällen ist dabei die Guardelektrode kürzer als die Sondenelektrode.

Eine Ausgestaltung beinhaltet, dass mindestens eine Trenneinheit vorgesehen ist, welche die Guardelektrode und die Sondenelektrode elektrisch voneinander trennt. Die Trenneinheit ist insbesondere räumlich zwischen der Guardelektrode und der Sondenelektrode angeordnet.

Eine Ausgestaltung beinhaltet, dass die Trenneinheit zumindest abschnittsweise zylindrisch ausgestaltet ist.

Eine Ausgestaltung sieht vor, dass die Trenneinheit zumindest abschnittsweise konisch zuläuft. Die Spitze des Konus mündet insbesondere in Richtung der Sondenelektrode.

Eine Ausgestaltung sieht vor, dass die Isolierungseinheit einen im Wesentlichen gleich bleibenden Außendurchmesser aufweist.

Eine Ausgestaltung beinhaltet, dass die Isolierungseinheit im Bereich der Guardelektrode einen größeren Außendurchmesser als im Bereich der Sondenelektrode aufweist.

Eine Ausgestaltung beinhaltet, dass die Isolierungseinheit im Bereich der Guardelektrode einen im Wesentlichen unterschiedlichen DK-Wert als im Bereich der Sondenelektrode aufweist. Die DK-Werte der Isolierungseinheit sind als abschnittsweise unterschiedlich.

Eine Ausgestaltung sieht vor, dass die Isolierungseinheit zumindest abschnittsweise schlauchförmig ausgestaltet ist.

Eine Ausgestaltung beinhaltet, dass es sich bei der Prozessgröße um den Füllstand handelt.

Eine Ausgestaltung sieht vor, dass es sich bei dem Ansteuersignal um eine elektrische Wechselspannung einer vorgebbaren Frequenz handelt.

Die Erfindung wird anhand der nachfolgenden Zeichnungen näher erläutert. Es zeigt:
Fig. 1: den prinzipiellen Aufbau zur kapazitiven Messung bzw. Überwachung des Füllstands eines Mediums in einem Behälter,
Fig. 2: einen Schnitt durch eine erste Ausgestaltung einer erfindungsgemäßen Sondeneinheit, und
Fig. 3: einen Schnitt durch eine zweite Ausgestaltung einer erfindungsgemäßen Sondeneinheit.

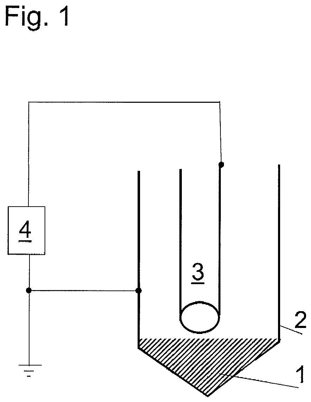

Die Fig. 1 zeigt den prinzipiellen Aufbau einer kapazitiven Messung des Füllstandes eines Mediums 1 in einem Behälter 2. In den Behälter 2 eingebracht ist die Sondeneinheit 3, welche dabei beim Erreichen des entsprechenden Füllstands auch mit dem Medium 1 in Kontakt kommt. Verbunden mit der Sondeneinheit 3 ist die Elektronikeinheit 4, welche die Sondeneinheit 3 mit dem Ansteuersignal beaufschlagt. Dabei handelt es sich in den meisten Fällen um eine elektrische Wechselspannung mit einer vorgebbaren Frequenz. Die Elektronikeinheit 4 greift von der Sondeneinheit 3 ein Empfangssignal ab. Dabei handelt es sich üblicherweise um einen elektrischen Wechselstrom, welcher meist über ein Ohmsches Widerstandselement in eine elektrische Wechselspannung umgewandelt wird. Diese Wechselspannung wird beispielsweise in der Elektronikeinheit 4 digitalisiert und lässt sich somit in Hinsicht auf den Füllstand passend auswerten. Das kapazitive Messprinzip geht davon aus, dass die Sondeneinheit 2 und in diesem Beispiel die Wandung des Behälters 2 in Verbindung mit dem Medium 1, welches als Dielektrikum aufgefasst wird, einen elektrischen Kondensator bilden. Die Kapazität dieses Kondensators hängt ab vom Füllstand des Mediums 1, so dass aus der Messung der Kapazität über passend hinterlegte Abgleichsdaten auf den Füllstand des Mediums 1 rückgeschlossen werden kann. Bei leitfähigen Medien ist die Sondeneinheit 3 isoliert, und das Medium 1 liegt auf dem gleichen elektrischen Potential wie die Wandung des Behälters 2. Als Dielektrikum des Kondensators dient damit die Isolierung der Sondeneinheit 3. Die Kapazität der Anordnung bzw. des Kondensators ändert sich dabei in Abhängigkeit vom Anteil der Oberfläche der Isolierung, welche vom Medium umschlossenen ist.

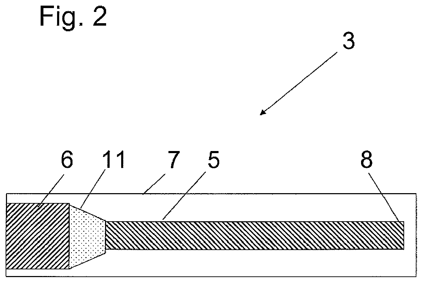

In der Fig. 2 ist ein Schnitt durch eine Sondeneinheit 3 dargestellt. Die Sondenelektrode 5 ist dabei stabförmig ausgestaltet und wird abschnittsweise koaxial von der Guardelektrode 6 umgeben. Insbesondere weist die Sondenelektrode 5 eine größere Länge als die Guardelektrode 6 auf. D.h. die Sondeneinheit 3 endet mit der Sondenelektrode 5 und nur am Anfang der Sondeneinheit 3, d.h. in der Nähe ihrer Befestigung umgibt die Guardelektrode 6 die Sondenelektrode 5. Die Sondenelektrode 5 und die Guardelektrode 6 sind dabei im Wesentlichen zylindrisch, wobei der Durchmesser der Sondenelektrode 5 kleiner als der Durchmesser der Guardelektrode 6 ist. Umfasst werden die Guardelektrode 6 und die Sondenelektrode 5 von der Isolierungseinheit 7, welche im Bereich der Guardelektrode 6 eine geringere Stärke aufweist als im Bereich der Sondenelektrode 5. Die Isolation um die Guardelektrode 6 ist somit dünner als um die Sondenelektrode 5. Diese Ausgestaltung lässt sich beispielsweise dadurch erreichen, dass die Isolierungseinheit 7 entsprechende Aussparungen im Inneren aufweist, wobei der Durchmesser der Aussparung im Endbereich der Isolierungseinheit 7 kleiner als im Anfangsbereich ist. Zwischen der Guardelektrode 6 und der Sondenelektrode 5 befindet sich eine Trenneinheit 11. Dabei handelt es sich um eine beispielsweise aus einem Kunststoff bestehende Einheit, welche die beiden Elektroden 5, 6 elektrisch voneinander isoliert. Wie hier und in den folgenden Abbildungen ist die Isolierungseinheit 7 nach außen, also in Richtung des Mediums einstückig und spaltfrei. Die Isolierungseinheit 7 umfasst vollständig den dem Medium zugewandten Endbereich 8 der Sondenelektrode 5 und dient somit einer vollständigen elektrischen Isolierung der Sondenelektrode 5. Die Sondeneinheit 3 wird somit vollständig und spaltfrei von der Isolierungseinheit 7 umfasst.

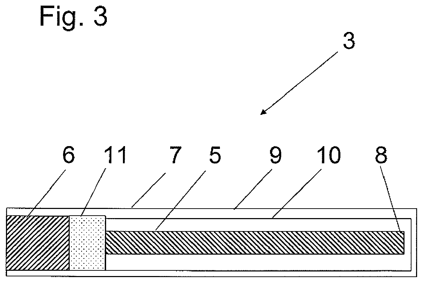

In der Fig. 3 ist ein Schnitt durch eine wie in der Fig. 2 gezeigte rotationssymmetrische Sondeneinheit 3 dargestellt. Die Isolationseinheit 7 besteht hier aus zwei Teilisolierungen 9 und 10, wobei die zweite Isolierungseinheit 10 nur die Sondenelektrode 5 umfasst und die erste Isolierung 9 sowohl die zweite Isolierung 10 als auch die Guardelektrode 6 umschließt. Somit lässt sich also auch der Effekt erzielen, dass die Isolierung im Bereich der Sondenelektrode 5 eine größere Dicke als im Bereich der Guardelektrode 6 aufweist. In einer Ausgestaltung sind die beiden Isolationseinheiten 9, 10 als Schläuche ausgestaltet. In einer weiteren Ausgestaltung werden die Isolationseinheiten 9, 10 als Schichten in Form von Pulverbeschichtungen realisiert. In einer weiteren Ausgestaltung werden für die Isolation unterschiedliche Materialen je nach dem Abschnitt, welchen die Isolation umhüllt, verwendet. Nach außen ist aber auch hier die Isolierungseinheit 7 spaltenfrei.

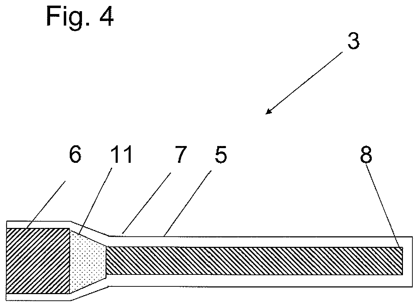

In der Fig. 4 wird eine weitere Ausgestaltung der Isolation dadurch erreicht, dass die Isolierungseinheit 7 über die Guardelektrode 6 derartig gespannt wird, dass sie dort eine geringere Wandstärke aufweist. Die Isolierungseinheit 7 ist somit dünner um die Guardelektrode 6 herum. Gleichzeitig ist der Außendurchmesser der Isolierungseinheit 7 nicht im Wesentlichen konstant wie in den Abbildungen Fig. 2 und Fig. 3, sondern abschnittsweise unterschiedlich.

### Bezugszeichenliste

**Tabelle 1**

| | |
|---|---|
| 1 | Medium |
| 2 | Behälter |
| 3 | Sondeneinheit |
| 4 | Elektronikeinheit |
| 5 | Sondenelektrode |
| 6 | Guardelektrode |
| 7 | Isolierungseinheit |
| 8 | Endbereich der Sondenelektrode |
| 9 | Erste Teilisolierung |
| 10 | Zweite Teilisolierung |
| 11 | Trenneinheit |

## Patentansprüche

1. Vorrichtung zur Bestimmung und/oder Überwachung mindestens einer Prozessgröße eines Mediums (1),
mit mindestens einer Sondeneinheit (3)
und
mit mindestens einer Elektronikeinheit (4), welche die Sondeneinheit (3) mit einem Ansteuersignal beaufschlagt und welche von der Sondeneinheit (3) ein Empfangssignal empfängt,
wobei die Sondeneinheit (3) mindestens eine Sondenelektrode (5) und
mindestens eine Guardelektrode (6) aufweist
und
wobei die Guardelektrode (6) die Sondenelektrode (5) abschnittsweise koaxial umgibt,
**dadurch gekennzeichnet,**
**dass** die Sondenelektrode (5) und die Guardelektrode (6) von mindestens einer Isolierungseinheit (7) umgeben sind, welche die Sondeneinheit (3) vollständig umfasst,
und
**dass** die Isolierungseinheit (7) im Bereich der Guardelektrode (6) eine geringere Dicke als im Bereich der Sondenelektrode (5) aufweist.

2. Vorrichtung nach Anspruch 1, **dadurch gekennzeichnet,**
**dass** die Sondeneinheit (3) zumindest abschnittsweise stabförmig ausgestaltet ist.

3. Vorrichtung nach mindestens einem der Ansprüche 1 bis 2, **dadurch gekennzeichnet,**
**dass** die Guardelektrode (6) und/oder die Sondenelektrode (5) zumindest abschnittsweise zylindrisch ausgestaltet sind.

4. Vorrichtung nach mindestens einem der Ansprüche 1 bis 3, **dadurch gekennzeichnet,**
**dass** die Guardelektrode (6) einen größeren Umfang und/oder einen größeren Durchmesser und/oder eine größere Oberfläche als die Sondenelektrode (5) aufweist.

5. Vorrichtung nach mindestens einem der Ansprüche 1 bis 4, **dadurch gekennzeichnet,**
**dass** mindestens eine Trenneinheit (11) vorgesehen ist, welche die Guardelektrode (6) und die Sondenelektrode (5) elektrisch voneinander trennt.

6. Vorrichtung nach Anspruch 5,
**dadurch gekennzeichnet,**
**dass** die Trenneinheit (11) zumindest abschnittsweise zylindrisch ausgestaltet ist.

7. Vorrichtung nach Anspruch 5 oder 6, **dadurch gekennzeichnet,**
**dass** die Trenneinheit (11) zumindest abschnittsweise konisch zuläuft.

8. Vorrichtung nach mindestens einem der Ansprüche 1 bis 7, **dadurch gekennzeichnet,**
**dass** die Isolierungseinheit (7) einen im Wesentlichen gleich bleibenden Außendurchmesser aufweist.

9. Vorrichtung nach mindestens einem der Ansprüche 1 bis 7, **dadurch gekennzeichnet,**
**dass** die Isolierungseinheit (7) im Bereich der Guardelektrode (6) einen größeren Außendurchmesser als im Bereich der Sondenelektrode (5) aufweist.

10. Vorrichtung nach mindestens einem der Ansprüche 1 bis 9, **dadurch gekennzeichnet,**
**dass** die Isolierungseinheit (7) im Bereich der Guardelektrode (6) einen im Wesentlichen unterschiedlichen Wert der Dielektrizitätskonstante als im Bereich der Sondenelektrode (5) aufweist.

11. Vorrichtung nach mindestens einem der Ansprüche 1 bis 10, **dadurch gekennzeichnet,**
**dass** die Isolierungseinheit (7) zumindest abschnittsweise schlauchförmig ausgestaltet ist.

12. Vorrichtung nach mindestens einem der Ansprüche 1 bis 11,
**dadurch gekennzeichnet,**
**dass** es sich bei der Prozessgröße um den Füllstand handelt.

13. Vorrichtung nach mindestens einem der Ansprüche 1 bis 12, **dadurch gekennzeichnet,**
**dass** es sich bei dem Ansteuersignal um eine elektrische Wechselspannung einer vorgebbaren Frequenz handelt.

## Claims

1. Apparatus for determining and/or monitoring at least one process variable of a medium (1),
with at least one probe unit (3)
and
with at least one electronics unit (4), which directs a control signal to the probe unit (3) and which receives a reception signal from the probe unit (3),
wherein the probe unit (3) has at least one probe electrode (5) and at least one guard electrode (6)
and
wherein the guard electrode (6) in part coaxially surrounds the probe electrode (5),
**characterized in that**
the probe electrode (5) and the guard electrode (6) are surrounded by at least one insulation unit (7), which encompasses the probe unit (3) entirely,
and
**in that** the insulation unit (7) is less thick in the area of the guard electrode (6) than in the area of the probe electrode (5).

2. Apparatus as claimed in Claim 1,
**characterized in that**
the probe unit (3) is at least partially designed as bar-shaped.

3. Apparatus as claimed in at least one of the Claims 1 to 2,
**characterized in that**
the guard electrode (6) and/or the probe electrode (5) are at least partially cylindrical in design.

4. Apparatus as claimed in at least one of the Claims 1 to 3,
**characterized in that**
the guard electrode (6) has a larger circumference and/or a larger diameter and/or a larger surface than the probe electrode (5).

5. Apparatus as claimed in at least one of the Claims 1 to 4,
**characterized in that**
at least one separation unit (11) is provided, which electrically separates the guard electrode (6) from the probe electrode (5).

6. Apparatus as claimed in Claim 5,
**characterized in that**
the separation unit (11) is at least partially cylindrical in design.

7. Apparatus as claimed in Claim 5 or 6,
**characterized in that**
the insulation unit (11) at least partially extends in a conical manner.

8. Apparatus as claimed in at least one of the Claims 1 to 7,
**characterized in that**
the insulation unit (7) has an essentially constant outer diameter.

9. Apparatus as claimed in at least one of the Claims 1 to 7,
**characterized in that**
the insulation unit (7) has a larger outer diameter in the area of the guard electrode (6) than in the area of the probe electrode (5).

10. Apparatus as claimed in at least one of the Claims 1 to 9,
**characterized in that**
the insulation unit (7) has an essentially different value for the dielectric constant in the area of the guard electrode (6) than in the area of the probe electrode (5).

11. Apparatus as claimed in at least one of the Claims 1 to 10,
**characterized in that**
the insulation unit (7) is at least partially tubular in design.

12. Apparatus as claimed in at least one of the Claims 1 to 11,
**characterized in that**
the process variable is the level.

13. Apparatus as claimed in at least one of the Claims 1 to 12,
**characterized in that**
the control signal is an electrical alternating voltage of a pre-definable frequency.

## Revendications

1. Dispositif destiné à la détermination et/ou la surveillance d'au moins une grandeur process d'un produit (1),
avec au moins une unité de sonde (3)
et
avec au moins une unité électronique (4), laquelle achemine à l'unité de sonde (3) un signal de commande et laquelle reçoit de l'unité de sonde (3) un signal de réception,
pour lequel l'unité de sonde (3) comporte au moins une électrode de sonde (5) et au moins une électrode de protection (6)
et
pour lequel l'électrode de protection (6) entoure partiellement, de manière coaxiale, l'électrode de sonde (5),
**caractérisé**
**en ce que** l'électrode de sonde (5) et l'électrode de protection (6) sont entourées par au moins une unité d'isolation (7), laquelle englobe entièrement l'unité de sonde (3),
et
**en ce que** l'unité d'isolation (7) présente dans la zone de l'électrode de protection (6) une épaisseur inférieure à celle dans la zone de l'électrode de sonde (5).

2. Dispositif selon la revendication 1,
**caractérisé**
**en ce que** l'unité de sonde (3) est conçue au moins partiellement en forme de tige.

3. Dispositif selon au moins l'une des revendications 1 à 2,
**caractérisé**
**en ce que** l'électrode de protection (6) et/ou l'électrode de sonde (5) sont conçues au moins partiellement de façon cylindrique.

4. Dispositif selon au moins l'une des revendications 1 à 3,
**caractérisé**
**en ce que** l'électrode de protection (6) présente un périmètre supérieur et/ou un diamètre supérieur et/ou une surface supérieure à ceux de l'électrode de sonde (5).

5. Dispositif selon au moins l'une des revendications 1 à 4,
**caractérisé**
**en ce qu'**est prévue au moins une unité de séparation (11), laquelle sépare électriquement l'électrode de protection de l'électrode de sonde (5).

6. Dispositif selon la revendication 5,
**caractérisé**
**en ce que** l'unité de séparation (11) est conçue au moins partiellement de manière cylindrique.

7. Dispositif selon la revendication 5 ou 6,
**caractérisé**
**en ce que** l'unité de séparation (11) s'étend au moins partiellement de manière conique.

8. Dispositif selon au moins l'une des revendications 1 à 7,
**caractérisé**
**en ce que** l'unité d'isolation (7) présente pour l'essentiel un diamètre extérieur constant.

9. Dispositif selon au moins l'une des revendications 1 à 7,
**caractérisé**
**en ce que** l'unité d'isolation (7) présente dans la zone de l'électrode de protection (6) un diamètre extérieur supérieur à celui dans la zone de l'électrode de sonde (5).

10. Dispositif selon au moins l'une des revendications 1 à 9,
**caractérisé**
**en ce que** l'unité d'isolation (7) présente dans la zone de l'électrode de protection (6) une valeur de constante diélectrique pour l'essentiel différente de celle dans la zone de l'électrode de sonde (5).

11. Dispositif selon au moins l'une des revendications 1 à 10,
**caractérisé**
**en ce que** l'unité d'isolation (7) est conçue au moins partiellement en forme de tube.

12. Dispositif selon au moins l'une des revendications 1 à 11,
**caractérisé**
**en ce que**, concernant la grandeur process, il s'agit du niveau.

13. Dispositif selon au moins l'une des revendications 1 à 12,
**caractérisé**
**en ce que**, concernant le signal de commande, il s'agit d'une tension électrique alternative d'une fréquence prédéfinissable.
